(19) Europäisches Patentamt
European Patent Office
Office européen des brevets

(11) **EP 3 200 151 A1**

(12) **EUROPEAN PATENT APPLICATION**

(43) Date of publication:
02.08.2017 Bulletin 2017/31

(51) Int Cl.:
**G06T 7/00** (2017.01)

(21) Application number: 16305091.7

(22) Date of filing: 29.01.2016

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing
92130 Issy-les-Moulineaux (FR)**

(72) Inventors:
- **SABATER, Neus
  35576 Cesson Sévigné Cedex (FR)**
- **BABON, Frédéric
  35576 Cesson Sévigné Cedex (FR)**
- **BOISSON, Guillaume
  35576 Cesson Sévigné Cedex (FR)**

(74) Representative: **Huchet, Anne
TECHNICOLOR
1-5, rue Jeanne d'Arc
92130 Issy-les-Moulineaux (FR)**

(54) **METHOD AND DEVICE FOR OBTAINING A DEPTH MAP**

(57) A method and device to obtain a depth map associated with a scene represented with different views. Following operations are performed:
a) obtaining (82) a focal stack from the views, the focal stack comprising slices each representative of the scene at a different depth value, each slice corresponding to a matrix of first elements;
b) for each first element in each slice, determining (83) a first sharpness value from pixels of the views used to obtain said each first element;
c) for each second element of said depth map, associating a second sharpness value corresponding to the minimal first sharpness value among the plurality of first sharpness values associated with the first elements having same row and column indices as said each second element;
d) for at least some second elements, associating (84) a depth information that corresponds to the depth value of the slice of the focal stack comprising the first element having the minimal sharpness value;
e) updating (86) the views by removing pixels used to obtain the first elements corresponding to second elements having an associated second sharpness value less than or equal to a determined level;
f) reiterating operations a) to d) based on the updated views.

Fig 8

## Description

### 1. Technical domain

The present disclosure relates to light-field imaging, and to technologies for acquiring and processing light-field data. The present disclosure also relates to a method and apparatus to obtain a depth map associated with a scene from a lightfield content, and finds applications in the domain of image or video rendering for example.

### 2. Background art

This section is intended to introduce the reader to various aspects of art, which may be related to various aspects of the present disclosure that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Conventional image capture devices render a three-dimensional scene onto a two-dimensional sensor. During operation, a conventional capture device captures a two-dimensional (2-D) image representing an amount of light that reaches a photosensor (or photodetector) within the device. However, this 2-D image contains no information about the directional distribution of the light rays that reach the photosensor (which may be referred to as the light-field). Depth, for example, is lost during the acquisition. Thus, a conventional capture device does not store most of the information about the light distribution from the scene.

Light-field capture devices (also referred to as "light-field data acquisition devices") have been designed to measure a four-dimensional (4D) light-field of the scene by capturing the light from different viewpoints of that scene. Thus, by measuring the amount of light traveling along each beam of light that intersects the photosensor, these devices can capture additional optical information (information about the directional distribution of the bundle of light rays) for providing new imaging applications by post-processing. The information acquired/obtained by a light-field capture device is referred to as the light-field data. Light-field capture devices are defined herein as any devices that are capable of capturing light-field data. There are several types of light-field capture devices, among which plenoptic devices, which use a microlens array placed between the image sensor and the main lens, and camera array, where all cameras image onto a single shared image sensor.

Light-field data processing comprises notably, but is not limited to, generating refocused images of a scene, generating perspective views of a scene, generating depth maps of a scene, generating extended depth of field (EDOF) images, generating stereoscopic images, generating a focal stack, (which comprises a collection of images, each of them being focused at a different focalization distance), and/or any combination of these.

Determining depth information associated with a scene from light-field data and associated focal stack is for example described in the article entitled "Reconstructing Occluded Surfaces using Synthetic Apertures: Stereo, Focus and Robust Measures", by Vaibhav Vaish et al., in Computer Vision and Pattern Recognition, 2006 IEEE Computer Society Conference on Vol. 2. The techniques described let room for improvement, for example for determining depth associated with occlusion points, i.e. points that are not fully visible, i.e. not visible in all the views obtained from the light-field data.

### 3. Summary

The present disclosure relates to an apparatus configured and/or adapted to obtain a depth map associated with a scene, the scene being represented in a plurality of views, a different point of view being associated with each view of the plurality of views, the apparatus comprising at least one processor configured to perform following operations:

> a) obtaining a focal stack from the plurality of views, the focal stack comprising a plurality of slices each representative of the scene at a different depth value, each slice of the plurality of slices corresponding to a matrix of first elements;
> b) for each first element of a set of first elements in each slice of the plurality of slices, determining a first sharpness value from pixels of the views used to obtain said each first element;
> c) for each second element of a set of second elements comprised in the depth map, associating a second sharpness value corresponding to the minimal first sharpness value among the plurality of first sharpness values associated with the first elements having same row and column indices as said each second element;
> d) for each second element of at least a part of the set of second elements, associating a depth information with said each second element, the associated depth information corresponding to the depth value of the slice of the focal stack comprising the first element having the minimal sharpness value;
> e) updating the plurality of views by removing pixels of the plurality of views used to obtain the first elements corresponding to second elements having an associated second sharpness value less than or equal to a determined level;
> f) reiterating operations a) to d) based on the updated plurality of views.

The present disclosure also relates to a method of obtaining a depth map associated with a scene, said scene being represented in a plurality of views, a different point of view being associated with each view of said plurality of views, the method comprising the operations a) to f) performed in the apparatus.

According to a characteristic, the first sharpness value corresponds to:

- a result of a cost function measuring a similarity between pixels of the plurality of views used to obtain said each first element; or
- a result of a clustering of said pixels of the plurality of views used to obtain said each first element.

According to a particular characteristic, the first element and the second element correspond to one pixel or to a group of at least two pixels.

According to a specific characteristic, the apparatus further comprises a receiver configured to receive the plurality of views from a camera array, the number of cameras of the camera array corresponding to the number of views.

According to another characteristic, the operations e) and f) are reiterated until the depth map comprises a percentage of second elements having a sharpness value less than or equal to the determined level greater than or equal to a determined percentage.

According to another characteristic, the operation of associating a depth information with said each second element is performed only for second elements having an associated second sharpness value less than or equal to the determined level.

The present disclosure also relates to a computer program product comprising instructions of program code for executing steps of the method of obtaining a depth map, when the program is executed on a computing device.

The present disclosure also relates to a processor readable medium having stored therein instructions for causing a processor to perform at least a step of the method of obtaining a depth map.

The present disclosure also related to a communication terminal comprising a lightfield camera and/or a processing unit configured to implement the method of obtaining a depth map.

## 4. List of figures

The present disclosure will be better understood, and other specific features and advantages will emerge upon reading the following description, the description making reference to the annexed drawings wherein:

- figure 1 shows a first example of a lightfield camera, according to a particular embodiment of the present principles;
- figures 2A and 2B show second examples of a lightfield camera, according to particular embodiments of the present principles;

- figure 3 shows a processing unit configured to process data provided by the lightfield camera of figure 1 or 2 and/or to implement the method of figure 8, according to a particular embodiment of the present principles;
- figure 4 shows a matrix of views obtained with lightfield data obtained with the lightfield camera of figure 1 or 2, according to a particular embodiment of the present principles;
- figure 5 shows a focal stack obtained from the matrix of views of figure 4, according to a particular embodiment of the present principles;
- figure 6 and 7 show operations to obtain the focal stack of figure 5, according to a particular embodiment of the present principles;
- figure 8 shows a method of obtaining a depth map using the matrix of views of figure 4, according to a particular embodiment of the present principles;
- figure 9 shows a telecommunication device comprising the lightfield camera of figure 1 or 2, according to a particular embodiment of the present principles.

## 5. Detailed description of embodiments

The subject matter is now described with reference to the drawings, wherein like reference numerals are used to refer to like elements throughout. In the following description, for purposes of explanation, numerous specific details are set forth in order to provide a thorough understanding of the subject matter. It can be evident, however, that subject matter embodiments can be practiced without these specific details.

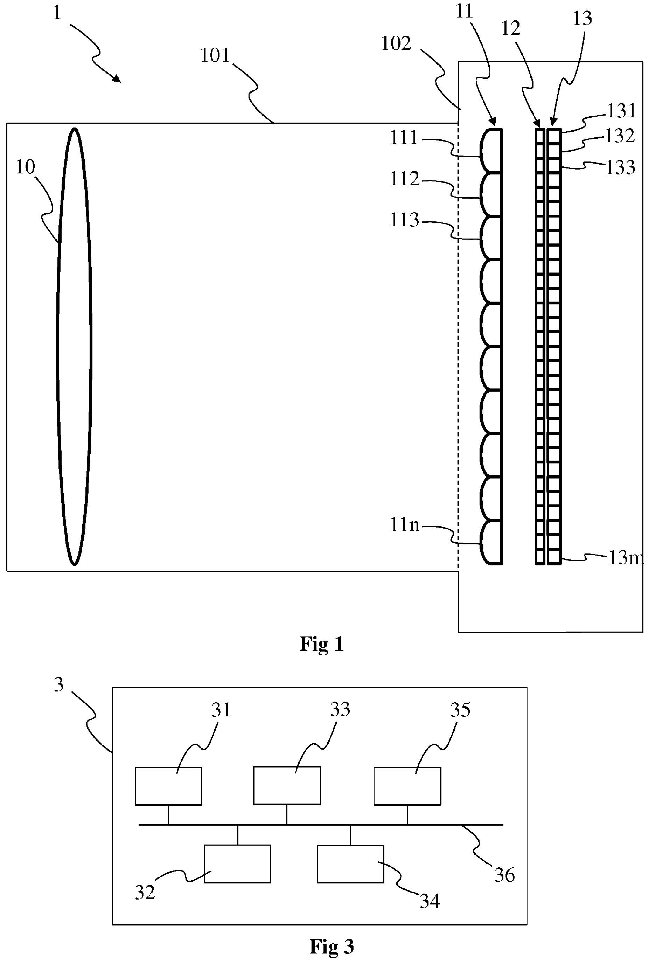

**Figure 1** shows a first example of a lightfield acquisition device. More specifically, figure 1 shows a plenoptic camera 1, according to a particular embodiment of the present principles. The plenoptic camera 1 comprises a lens unit 101 (corresponding to an optical assembly) and a camera body 102.

The lens unit 101 is advantageously adapted to be associated with the camera body 102. The camera body 102 comprises a photosensor array 13, which comprises a plurality m of photosensors 131, 132, 133 to 13m. Each photosensor corresponds to a pixel of the raw image of the scene acquired with the photosensor array, with each pixel encompassing a part (also called a point) of the scene. Data representative of the scene obtained with each photosensor form a set of lightfield data, the lightfield data forming a lightfield image. Before processing of the raw image (before demultiplexing and/or demosaicing), the lightfield image may correspond to the raw image according to a non-limitative example. After demultiplexing of the raw image, the lightfield image may correspond to sub-aperture images according to another non-limitative example and after demosaicing the lightfield image may correspond to the set of views of the scene according to a further non-limitative example. For purposes of illustration, the photosensor array 13 is shown with a relative small number of photosensors 131 to 13m. Naturally, the number of photosensors is not limited by the illustration of figure 1 but extends to any number of photosensors, for example several thousand or several millions of photosensors. For example in a 12.4 megapixel camera, a pixel will correspond to a photosensor (e.g. corresponding to an array of 4088 x 3040 pixels / photosensors). A color filter array (CFA) 12 may be arranged on the photosensor array 13. The CFA 12 typically arranges RGB (Red, Green and Blue) color filters on the photosensor array, the RGB arrangement taking for the example the form of a Bayer filter mosaic. According to a variant, a CFA is arranged on the lenslet array 11 (in addition to the CFA 12 or in replacement of the CFA 12). For associating the lens unit 101 with the camera body 102, the lens unit 101 comprises a first attaching part and the camera body 102 comprises a second attaching part, the first and second attaching parts being compatible with each other. Thanks to the first and second attaching parts, the lens unit 101 may be clipped onto the camera body 102 or the lens unit 101 may be screwed with the camera body 102. An example of such first and second attaching parts of a lens unit configured to be associated with a camera body may be found in the Japanese patent application JP2013-105151A, which was published on May 30, 2013. The first and second attaching parts are configured in such a way that, once the lens unit 101 and the camera body 102 have been put together, the lens unit 101 and the camera body 102 form a plenoptic camera configured for acquiring multiple views of a scene at each acquisition of the scene. To this end, the camera body 102 also comprises a lenslet array 11 comprising n microlenses 111, 112, 113, 11 n, n being an integer greater than or equal to 2. The lenslet array 11 is also called microlens array. For purposes of illustration, the lenslet array 11 is shown with a relative small number of microlenses, but the number of micro-lenses may extend up to several thousand or even one or several million of microlenses. A group of photosensors of the photosensor array 13 are optically associated with each microlens 111 to 11 n of the lenslet array 11. For example, each microlens 111 to 11 n of the lenslet array 11 is sized to correspond to an array of 2x1, 4x4 or 10x10 photosensors. A group of photosensors associated with a microlens (or said differently, a group of photosensors under the microlens) form a micro-image associated with this microlens, each photosensor of the group of photosensors forming a pixel of the micro-image. Each photosensor of the plurality of photosensors optically associated with one single microlens enables to acquire raw data representative of a pixel of the scene according to one position (acquisition of as many parallaxes as pixels). According to a variant, the lens unit 101 and the camera body 102 collectively form one single body and are assembled without being detachable.

The lens unit 101 comprises a camera lens 10, also called a main lens or primary lens, which is advantageously formed of one or more lens elements, only one lens element 10 being depicted in figure 1 for clarity purpose.

The plenoptic camera 1 is equally of the type 1.0, corresponding to a plenoptic camera wherein the distance between the lenslet array 11 and the photosensor array 13 is equal to the microlenses focal length, or of the type 2.0 otherwise (also called focused plenoptic camera).

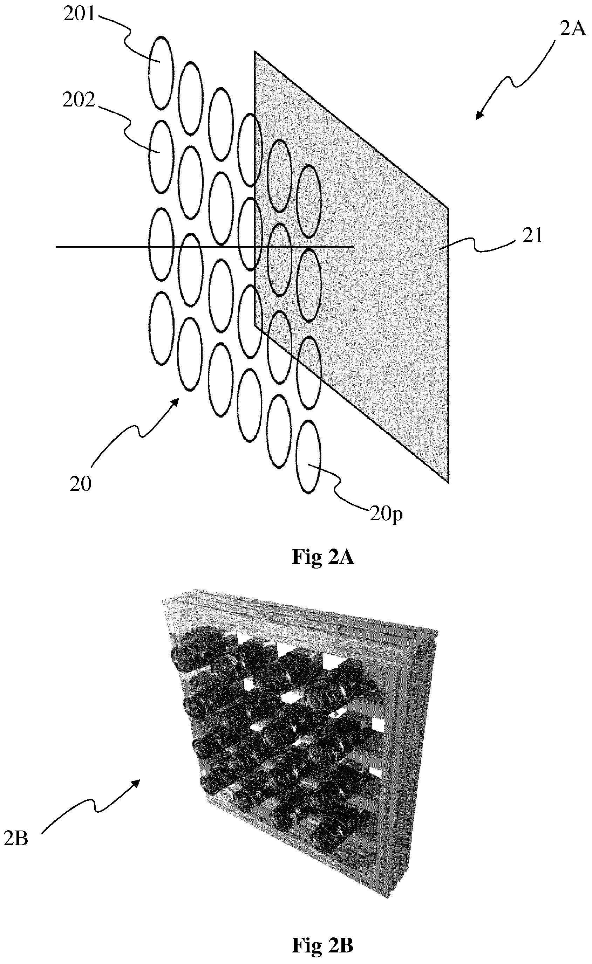

**Figures 2A and 2B** show further examples of a lightfield acquisition device. More specifically, figure 2A and 2B each show a camera array 2A, 2B (also called multi-cameras array), according to two particular embodiments of the present principles.

The camera array 2A comprises an array of lenses or micro-lenses, referenced 20, comprising several micro-lenses referenced 201, 202 to 20p with p being an integer corresponding to the number of micro-lenses, and one or several sensor arrays, referenced 21. The camera array 2A is without main lens. The array of lenses 20 may be a small device, which is commonly named a micro-lens array. It is worth noting that the camera array with a single sensor can be considered as a special case of plenoptic camera where the main lens has an infinite focal. According to a particular arrangement wherein the number of photosensors is equal to the number of micro-lenses, i.e. one photosensor is optically associated with one micro-lens, the camera array 20 may be seen as an arrangement of several individual cameras (for example micro-cameras) closely spaced from each other, such as a square arrangement (as illustrated in figure 2A) or a quincunx arrangement for example.

The camera array 2B corresponds to a rig of individual cameras each comprising a lens and a photosensor array. The cameras are spaced from each other, for example of a distance equal to a few centimetres or less, for example 5, 7 or 10 cm.

The lightfield data (forming a so-called lightfield image) obtained with such a camera array 2A or 2B corresponds to the plurality of views of the scene, i.e. to the final views obtained by demultiplexing and demosaicing of the raw image obtained with a plenoptic camera such as the plenoptic camera of figure 1. The cameras of the camera array are calibrated according to any known method, i.e. intrinsic and extrinsic parameters of the cameras are known.

**Figure 3** shows a schematic block diagram illustrating an example of an apparatus 3 for obtaining a focal stack and/or a depth map of a scene from lightfield data.

The apparatus 3 comprises a processor 31, a storage unit 32, an input device 33, a display device 34, and an interface unit 35 which are connected by a bus 36. Of course, constituent elements of the computer apparatus 3 may be connected by a connection other than a bus connection using the bus 36.

The processor 31 controls operations of the apparatus 3. The storage unit 32 stores at least one program to be executed by the processor 31, and various data, including data of 4D the light field images (lightfield data) captured and provided by a light field camera, parameters used by computations performed by the processor 31, intermediate data of computations performed by the processor 31, and so on. The processor 31 may be formed by any known and suitable hardware, or software, or a combination of hardware and software. For example, the processor 31 may be formed by dedicated hardware such as a processing circuit, or by a programmable processing unit such as a CPU (Central Processing Unit) and/or GPUs (Graphical Processing Unit) that executes a program stored in a memory thereof.

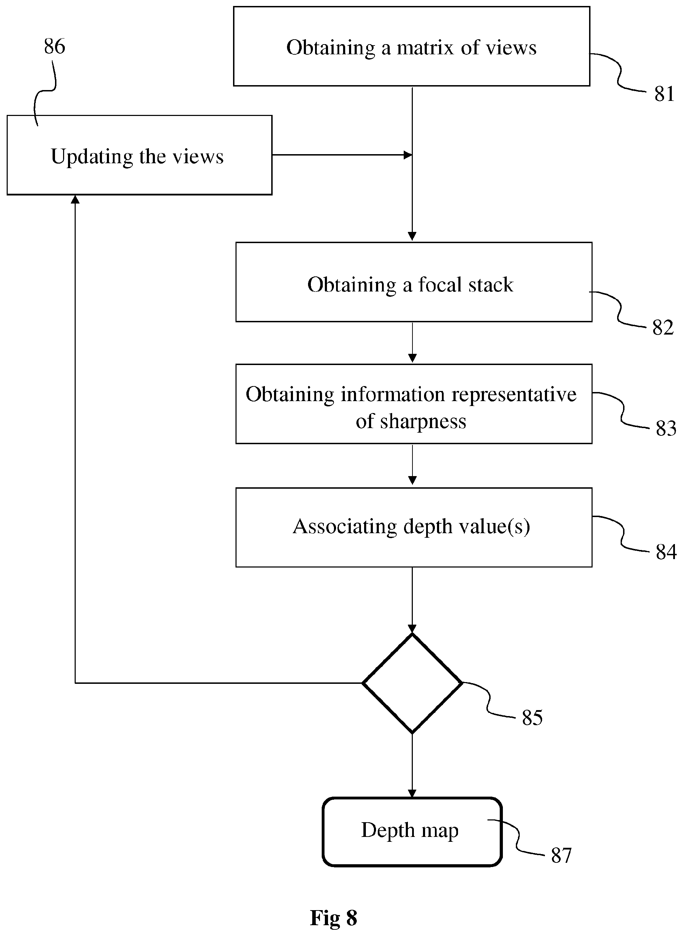

The storage unit 32 may be formed by any suitable storage or means capable of storing the program, data, or the like in a computer-readable manner. Examples of the storage unit 32 include non-transitory computer-readable storage media such as semiconductor memory devices, and magnetic, optical, or magneto-optical recording media loaded into a read and write unit. The program causes the processor 31 to perform a process for obtaining a focal stack of images and/or determining a depth map of the scene, according to an embodiment of the present disclosure as described hereinafter with reference to **Figure 8**.

The input device 33 may be formed by a keyboard, a pointing device such as a mouse, or the like for use by the user to input commands, to make user's selections of objects of interest within the scene. The output device 34 may be formed by a display device to display, for example, a Graphical User Interface (GUI), images of the focal stack, or a depth map image. The input device 33 and the output device 34 may be formed integrally by a touchscreen panel, for example.

The interface unit 35 provides an interface between the apparatus 3 and an external apparatus. The interface unit 35 may be communicable with the external apparatus via cable or wireless communication. In this embodiment, the external apparatus may be a light field camera. In this case, data of 4D light field images captured by the light field camera can be input from the light field camera to the apparatus 3 through the interface unit 35, then stored in the storage unit 32.

In this embodiment the apparatus 3 is exemplary discussed as it is separated from the lightfield camera and they may communicate with each other via cable or wireless communication, however it should be noted that the apparatus 3 may be integrated with such a lightfield camera.

Although only one processor 31 is shown on figure 3, it must be understood that such a processor may comprise different modules and units embodying the functions carried out by apparatus 3 according to embodiments of the present disclosure, such as:

- a module for determining the focal stack as the set of consecutive focused images;
- a module for identifying objects of interest in the scene;
- a module for assessing the depth of objects of interest;
- a module for determining the number of focused images to be associated to each object of interest;
- a depth computation module for calculating depths from the light field data set or from a matrix of views generated from the light field data set;
- a computing unit for computing the position of objects of interest in the scene from the calculated depths.

These modules and units may also be embodied in several processors 31 communicating and co-operating with each other.

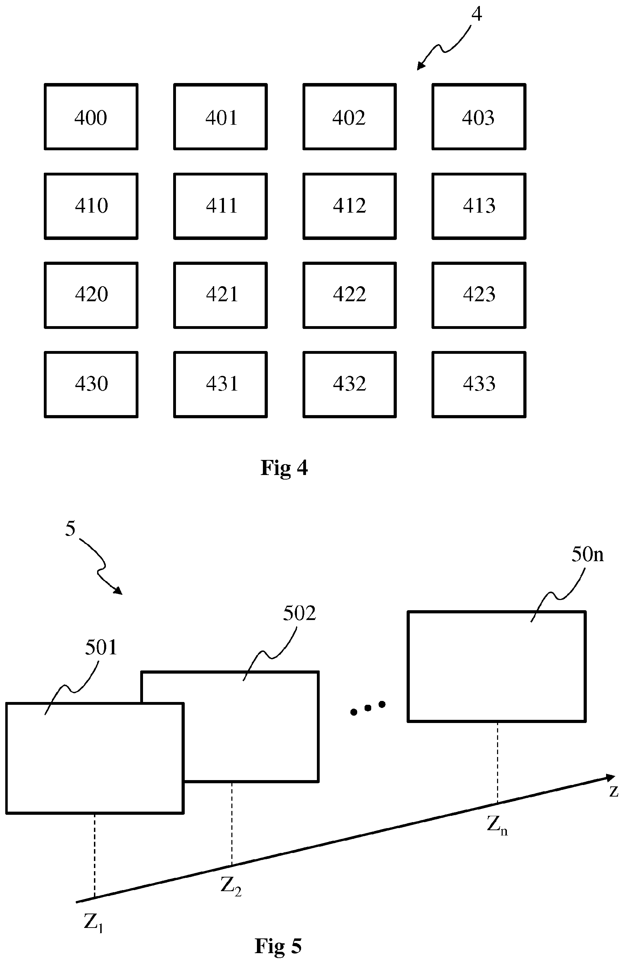

**Figure 4** shows a plurality of views obtained from lightfield data obtained with the lightfield camera 1 or 2, according to a particular and non-limiting embodiment of the present principles. In the example of figure 4, the views 400 to 403, 410 to 413, 420 to 423 and 430 to 433 are represented with a matrix 4 of 4 rows and 4 columns, the two last digit of each reference number of each view indicating the row indicia and the column indicia the view belongs to. For example, the view referenced 400 belongs to the first row having as indicia 0 and to the first column having as indicia 0 and the view referenced 421 belongs to the third row having as indicia 2 and to the second column having as indicia 1, the rows being indexed from 0 to 3 and the columns being indexed from 0 to 3.

Each view 400 to 403, 410 to 413, 420 to 423 and 430 to 433 is an image of the scene according to a particular point of view, each view being associated with a different point of view. Each view comprises a plurality of pixels, for example N rows x M columns of pixels, each pixel having color information associated with, for example RGB color information or CMY (Cyan, Magenta, Yellow) color information.

The views are for example obtained directly from the lightfield camera 2, one view being acquired directly through one lens of the array of lenses 20 or by processing the raw image acquired with the lightfield camera 1, i.e. by demultiplexing (as described in the article entitled "Accurate Depth Map Estimation from a Lenslet Light Field Camera" by Hae-Gon Jeon Jaesik Park Gyeongmin Choe Jinsun Park, Yunsu Bok Yu-Wing Tai In So Kweon) and demosaicing *(as described in "Image demosaicing: a systematic survey" by Li, Gunturk and Zhang, Proc. SPIE, vol. 6822, p. 68221J (2008))* the raw image. The demosaicing enables to recover a full color raw image, i.e. to recover full color information (for example RGB information) for the pixels of the raw image while the raw image acquired with the plenoptic image associates only one color component (R, G or B for example) with each pixel. The demultiplexing consists in reorganizing the pixels of the raw image in such a way that all pixels capturing the light rays with a certain angle of incidence are stored in the same image creating the so-called sub-aperture images. Each sub-aperture image is a projection of the scene under a different angle. The set of sub-aperture images creates a block matrix where the central image stores the pixels capturing the light rays perpendicular to the photosensor array.

Naturally, the number of views is not limited to 16 but extends to any integer number, for example 4 views, 10 views, 100 views or more. The arrangement of the views is not limited to a rectangular matrix arrangement but extends to any arrangement, for example a circular matrix arrangement, a quincunx matrix arrangement.

**Figure 5** shows a focal stack 5 obtained from the matrix of views 4, according to a particular and non-limiting embodiment of the present principles. A focal stack is a collection of N re-focused images R(n) (with n ∈ [1, N]) which define a cube of images, where N is a determined number of images, each re-focused images being called a slice. The N slices are computed for a depth value z varying linearly between a minimal depth value $z_{min}$ and a maximal depth value $z_{max}$ corresponding to a range of focalization distances, $z_{min}$ being for example equal to 0.2 m, 0.5 m, 1 m or more and $z_{max}$ being equal for example to 2m, 4m, 10m or more, $z_{min}$ and $z_{max}$ depending from the scene. The *min max* boundaries of z are for example set by a user in order to encompass slices with a focalization distance within $z_{min}$ and $z_{max}$. According to a variant, the *min max* boundaries of z are associated with the lightfield camera and for example fixed by the manufacturer. $Z_n$ indicates the depth associated with the slice with index n. For example, $Z_1$ is the depth associated with the first slice 501 of the focal stack 5, $Z_2$ is the depth associated with the second slice 502 of the focal stack 5 and $Z_n$ is the depth associated with the $n^{th}$ slice 50n of the focal stack 5. A point of view is associated with the focal stack, this point of view being one of the points of view of the different views of the matrix 4 or any point of view.

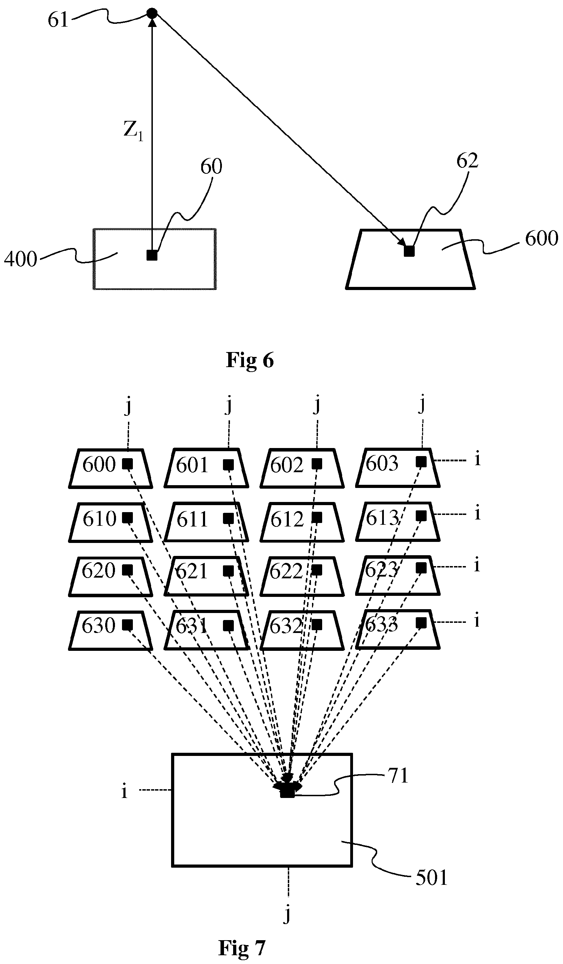

**Figures 6 and 7** show operations to obtain the focal stack 5, according to a particular and non-limiting embodiment of the present principles. The example of figures 6 and 7 illustrates operations to obtain one of the slices of the focal stack, for example the slice 501. It is understood that the other slices of the focal stack 5 are obtained in a same way.

In a first operation illustrated on figure 6, the pixels of the views are projected in the space of the scene of a distance corresponding to the depth associated with the considered slice of the focal stack, i.e. of a distance $Z_1$ according to the example of figures 6 and 7. Said differently, rays originating from the point of view of the view 400 are traced through each pixel of the view 400 to define points of the scene corresponding to each pixel, the distance between a pixel 60 and its corresponding point 61 along the ray passing through the pixel 60 being equal to $Z_1$. These points are projected into an image 600 with regard to a virtual camera position that corresponds to the point of view associated with the focal stack 5. For example, the point 61 is projected into the pixel 62 of the image 600 with regard to the point of view associated with the focal stack 5. The image 600 that corresponds to the view 400 is warped with regard to the view due to the change of point of view. The operation of figure 6 is repeated for each view of the matrix to obtain one image corresponding to one view in the space associated with the point of view of the focal stack 5.

The images obtained through the operation described with regard to figure 6 are illustrated on figure 7 and referenced 600 to 603, 610 to 613, 620 to 623 and 630 to 633, the images 600 to 603 corresponding to the views 400 to 403 respectively, the images 610 to 613 corresponding to the views 410 to 413 respectively, the images 620 to 623 corresponding to the views 420 to 423 respectively and the images 630 to 633 corresponding to the views 430 to 433 respectively.

In a second operation illustrated on figure 7, the slice 501 is obtained from the images 600 to 603, 610 to 613, 620 to 623 and 630 to 633. The slice 501 corresponds for example to an array of pixels, each pixel being referenced with a row index and a column index corresponding to the row and column said pixel belongs to. The number of rows and columns of the slice 501 is the same as the number of rows and columns of the images 600 to 603, 610 to 613, 620 to 623 and 630 to 633. A pixel 71 (with row index i and column index j) of the slice 501 is obtained as the sum of the pixels of the images 600 to 603, 610 to 613, 620 to 623 and 630 to 633 having the same row and column indicia, i.e. i and j respectively (illustrated with black dots on figure 7), divided by the number of images 600 to 603, 610 to 613, 620 to 623 and 630 to 633 (which corresponds to the number of views). The calculation is performed for each color channel in order to obtain a value for each color channel of the pixel 71.

First and second operations are performed for each slice 501, 502 to 50n of the focal stack 5 to obtain the full focal stack 5.

**Figure 8** shows a method of obtaining a depth map using the matrix of views 4, according to a particular and non-limiting embodiment of the present principles.

In a step 81, the matrix of views 4 is obtained, for example retrieved from a memory or directly from the photosensors array of the lightfield camera used to acquire the plurality of views of the scene. Each view of the matrix corresponds to an image of the scene according to a different point of view and comprises a plurality of pixels arranged under the form of rows and columns.

In a step 82, the focal stack 5 is obtained from the matrix of views as described with regard to figures 6 and 7. The focal stack comprises a set of N slices of the scene, N being an integer greater than or equal to 2, i.e. N images each representative of the scene at a different depth value $Z_n$. A determined point of view is associated with the focal stack 5 that corresponds either to one of the points of view associated with the views of the matrix 4 or to a point of view different from the points of view associated with the views of the matrix 4. A slice comprises a set of first elements, for example arranged in the form of a matrix of rows and columns. A first element corresponds for example to one pixel or to a group of several pixels, for example a rectangle of PxQ pixels, P ≥ 2 and Q ≥ 2. A first element is identified with the row index and the column index it belongs to. First elements having same row index and same column index in the different slices of the focal stack are called corresponding first elements. Corresponding first elements are corresponding in the sense that they refer (or correspond) to one same point of the scene according to different points of view.

For a considered depth value z in an interval $[Z_{min}, Zmax]$, the images $I_{i=1...M}$ corresponding to the M views are warped accordingly with regard to a virtual camera position corresponding to the point of view associated with the focal stack. The warped images at depth Zn are denoted $W_{i=1...M}^{z}$. The slice $S^z$ at depth z is obtained as an addition of all warped images:

$$S^z = \frac{1}{M} \sum_{i=1...M} W_i^z.$$

In a step 83, an information representative of sharpness is obtained for each first element or for at least a part of the set of first elements (for example for a determined spatial area of the slices) of the slices of the focal stack. The information representative of sharpness represents the level of clearness of the first element. The information of sharpness for a considered first element (e.g. the first element 71 of figure 7) is for example determined from a cost function measuring the similarity between the M samples (i.e. pixels) of the warped images (or equivalently of the views) used to obtain said first element (e.g. the M black dots of the images 600 to 603, 610 to 613, 620 to 623 and 630 to 633 of figure 7 used to obtain the first element 71). The more similar the M samples, the sharper is the considered first element. Different cost functions (CF) may be used to determine the information representative of sharpness, for example:

- Cost function based on variance:

$$CF(x,z) = \frac{1}{M} \sum_{i=1}^{M} [W_i^z(x) - S^z(x)]^2$$

wherein x represents the position of the considered first element within the considered slice (i.e. row and column numbers).
- Cost function based on color differences:

$$CF(x,z) = max_{n \neq m} |W_n^z(x) - W_m^z(x)|$$

wherein n and m represent indices of the row and column to which the views belong to in the matrix of views, each pair of views being compared with each other to determine the maximum of the difference between two views in the matrix of views.

According to a variant, the sharpness information is obtained by clustering the M samples of the views used to obtain the first element associated with said sharpness information. According to this variant, the sharpness information is for example the number of clusters obtained by the clustering operation. The clustering operation is for example based on the color information, samples having similar color information (i.e. with a difference less than a determined value) being grouped in a same cluster.

In a step 84, a depth information, e.g. a depth value, is determined for each second element or for at least a part of the second elements of a depth map associated with the scene according to the point of view of the focal stack 5. The depth map is a matrix of rows and columns of second elements, the number of rows (respectively columns) of the depth map being equal to the number of rows (respectively columns) of each slice of the focal stack. A second element corresponds for example to one pixel or or to a group of several pixels, for example a rectangle of PxQ pixels, P ≥ 2 and Q ≥ 2. The size (i.e. the number of pixel(s) and the number of rows and columns of pixels) of a second element is the same as the size of a first element. Each second element (defined with its row and column indicia) has an associated first element (i.e. having same row and column indicia) in each slice of the focal stack. In other words, a set of corresponding M first elements of the focal stack is associated with one different second element of the depth map. Considering a set of corresponding first elements of the focal stack (associated with one considered second element), the information of sharpness of said corresponding first elements is compared with each other to determine which first element is the sharpest. When the information of sharpness corresponds to the result of a cost function, the sharpest first element is the one having the minimal cost function among all first elements of the considered set of corresponding first elements (i.e. first elements having same row and column numbers in the slices of the focal stack 5). The depth information to associate with the considered second element of the depth map (associated with said considered set of corresponding first elements) corresponds to the depth value of the slice comprising the first element determined as the sharpest one in the set of corresponding first elements. For example, if the first element 71 of the slice 501 is determined as being the sharpest one (among all N first elements having same row and column indicia as the first element 71 in each of the N slices 501 to 50n), the depth information associated with the second element corresponding to the first element 71 is $Z_1$. The depth value Z(x) to associate with a considered second element 'x' (with x corresponding for example to the row and column indicia identifying the second element and corresponding first elements) is obtained for example with:

$$Z(x) = \text{argmin}_z \, CF(x,z)$$

The sharpness information that is determined minimal for a set of corresponding first elements is associated with the second element corresponding to said set of corresponding first elements.

According to a variant, the depth information is associated with the considered second element only when the information representative of sharpness associated with the first element belonging to the slice having as depth value the depth information is less than or equal to a determined value. The determined value is for example obtained empirically or set by a user, the determined value depending for example from the number of grey levels used to encode the color information. For example, if the sharpness information corresponds to the result of a cost function, the depth information is associated with the considered second element only when the result of the cost function is less than or equal to a threshold, e.g. 5, 10, or 10 for an 8 bits coding. If the sharpness information corresponds to the number of clusters obtained when clustering the M samples, the depth information is associated with the considered second element only when the number of cluster is equal to a determined number of cluster equal to 1.

In a step 85, it is checked whether each second element of the depth map has an associated sharpness information less than a determined level corresponding to the abovementioned determined value or determined number of cluster. When the number of second elements or the percentage of second elements fulfilling the requirement of the checking operation (i.e. sharpness information less than the determined level) is greater than or equal to a determined number/percentage (e.g. greater than or equal to 95 %, 98 % or 100 %), then the depth map is considered obtained and the process ends at step 87 with the obtaining of the depth map. When the number of second elements or the percentage of second elements fulfilling the requirement of the checking operation is less than said determined number/percentage, then the depth map is considered as partially obtained and step 86 is performed.

In the step 86, the views used to obtain the focal stack are updated by removing the pixels used to obtain the first elements of the focal stack corresponding to the second elements of the depth map having a sharpness information less than the determined level. Color information of the concerned pixel is for example removed from the memory device used to store the views. According to another example, the removing consists in not considering (or not taking into account) the "removed" pixels when determining the focal stack. Such an operation enables to remove the points of objects of the scene that are visible in all the views and to consider only the points of the scene that are visible on only a part of the views. Steps 82, 83, 84 are reiterated based on the updated views to obtain additional depth information, i.e. to obtain depth information for second elements not fulfilling the checking requirement of previous step 85. An updated focal stack is obtained from the updated views, the updated focal stack having the same point of view as the focal stack 5. An updated sharpness information is calculated for the first elements obtained from the updated views and an updated depth information is obtained as described with regard to step 84 for the second elements corresponding to the first elements obtained from the updated views. The reiteration of steps 82 to 84 enables to update the depth map with updated depth information and/or updated sharpness information for some of the second elements, i.e. for the second elements for which the previous sharpness information was less than the determined level after performing of the previous steps 82 to 84.

Steps 85 is reiterated to check whether the percentage of second elements of the updated depth map having a sharpness information less than the determined level is greater than or equal to the determined percentage. If yes, the depth map is considered as being obtained and the process ends with step 87. If no, the process proceeds further with a new update of the views at step 86 and a reiteration of steps 82 to 85 until the depth map is considered as being obtained.

In an optional step, one or more images of the scene is/are rendered and/or displayed on a display device using the depth information obtained with the operations described hereinabove. For example, an All-In-Focus (AIF) image is rendered in the focal stack image plane. According to a variant, one or more foreground objects of the scene may be removed from the focal stack or from the AIF image by using the depth information. The background information is recovered provided it is visible in at least one of the views.

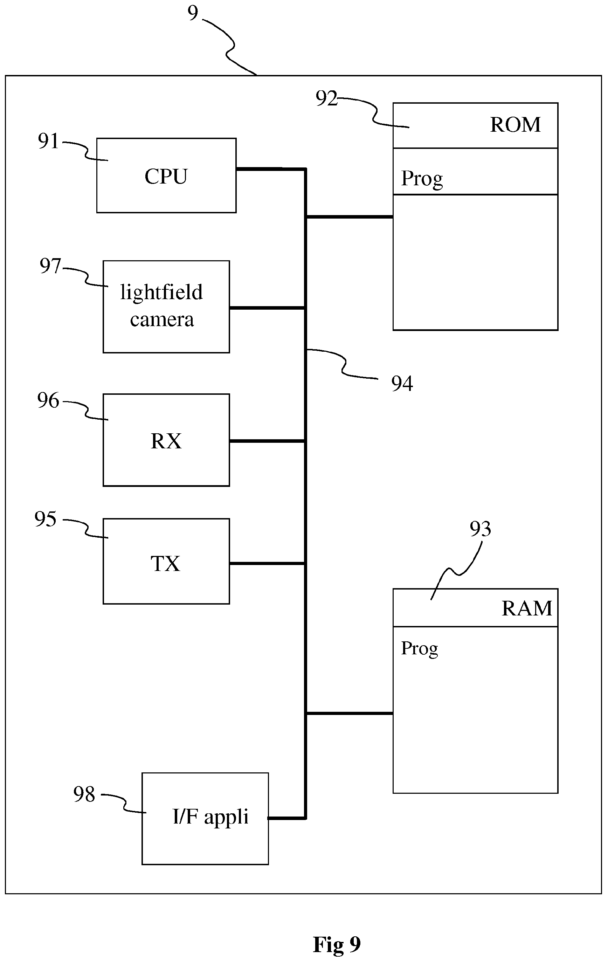

Figure 9 diagrammatically illustrates a hardware embodiment of a telecommunication device 9, corresponding for example to a smartphone or a tablet that embodies a lightfield camera in accordance with an aspect of the present principles.

The telecommunication device 9 comprises the following elements, connected to each other by a bus 94 of addresses and data that also transports a clock signal:

- a microprocessor 91 (or CPU),
- a non-volatile memory of ROM (Read Only Memory) type 92,
- a Random Access Memory or RAM 93,
- a radio interface 96,
- an interface 95 adapted for the transmission of data,
- a lightfield camera 97, corresponding for example to the plenoptic camera 1 of figure 1 or to the multi-camera array 2 of figure 2,
- an MMI (Man Machine Interface) 98 adapted for displaying information for a user and/or inputting data or parameters.

It is noted that the word "register" used in the description of memories 92 and 93 designates in each of the memories mentioned, a memory zone of low capacity as well as a memory zone of large capacity (enabling a whole programme to be stored or all or part of the data representing data received and decoded).

The memory ROM 92 comprises in particular a "prog" program.

The algorithms implementing the steps of the method specific to the present disclosure and described below are stored in the ROM 92 memory associated with the telecommunication device 9 implementing these steps. When powered up, the microprocessor 91 loads and runs the instructions of these algorithms.

The random access memory 93 notably comprises:

- in a register, the operating programme of the microprocessor 91 responsible for switching on the telecommunication device 9,
- reception parameters (for example parameters for modulation, encoding, MIMO, recurrence of frames),
- transmission parameters (for example parameters for modulation, encoding, MIMO, recurrence of frames),
- incoming data corresponding to the data received and decoded by the receiver 96,
- decoded data formed to be transmitted at the interface to the application 95,
- parameters of the lightfield camera,
- lightfield data forming the raw image and/or the views,
- data representative of the focal stack,
- information representative of depth, e.g. comprised in a depth map.

Other structures of the telecommunication device 9 than those described with respect to figure 9 are compatible with the present disclosure. In particular, according to variants, the telecommunication device may be implemented according to a purely hardware realisation, for example in the form of a dedicated component (for example in an ASIC (Application Specific Integrated Circuit) or FPGA (Field-Programmable Gate Array) or VLSI (Very Large Scale Integration) or of several electronic components embedded in an apparatus or even in a form of a mix of hardware elements and software elements.

The radio interface 96 and the interface 95 are for example adapted for the reception and transmission of signals according to one or several telecommunication standards such as IEEE 802.11 (Wi-Fi), standards compliant with the IMT-2000 specifications (also called 3G), with 3GPP LTE (also called 4G), IEEE 802.15.1 (also called Bluetooth)...

According to a variant, the telecommunication device does not include any ROM but only RAM, the algorithms implementing the steps of the method specific to the present disclosure and described with regard to figure 8 being stored in the RAM. According to another variant, the telecommunication device 9 comprises a SSD (Solid-State Drive) memory instead of the ROM and/or the RAM.

Naturally, the present disclosure is not limited to the embodiments previously described.

In particular, the present disclosure is not limited to an apparatus configured to obtain a depth map from lightfield data or to a method of obtaining lightfield data but also extends to a method/apparatus for displaying the depth map and/or to reconstruct one or more views of the scene or part of the scene, for example background part of the scene by removing foreground objects and by using the determined depth information stored in the depth map or to any device comprising such an apparatus or implementing such method(s), for example a telecommunication device.

Telecommunication devices includes, for example, smartphones, smartwatches, tablets, computers, mobile phones, portable/personal digital assistants ("PDAs"), see-through glasses, Head-Mounted Display (HMD) and other devices that facilitate communication of information between end-users but also set-top-boxes.

The method of obtaining a depth map described herein may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A device to obtain a depth map associated with a scene, said scene being represented in a plurality of views, a different point of view being associated with each view of said plurality of views, the device comprising at least one processor configured to perform following operations:

   a) obtaining a focal stack from said plurality of views, said focal stack comprising a plurality of slices each representative of the scene at a different depth value, each slice of said plurality of slices corresponding to a matrix of first elements;
   b) for each first element of a set of first elements in each slice of said plurality of slices, determining a first sharpness value from pixels of said views used to obtain said each first element;
   c) for each second element of a set of second elements comprised in said depth map, associating a second sharpness value corresponding to the minimal first sharpness value among the plurality of first sharpness values associated with the first elements having same row and column indices as said each second element;
   d) for each second element of at least a part of said set of second elements, associating a depth information with said each second element, the associated depth information corresponding to the depth value of the slice of the focal stack comprising the first element having the minimal sharpness value;
   e) updating said plurality of views by removing pixels of said plurality of views used to obtain the first elements corresponding to second elements having an associated second sharpness value less than or equal to a determined level;
   f) reiterating operations a) to d) based on the updated plurality of views.

2. The device according to claim 1, wherein said first sharpness value corresponds to:

   - a result of a cost function measuring a similarity between pixels of said plurality of views used to obtain said each first element; or
   - a result of a clustering of said pixels of said plurality of views used to obtain said each first element.

3. The device according to claim 1 or 2, wherein said first element and said second element correspond to one pixel or to a group of at least two pixels.

4. The device according to one of claims 1 to 3, further comprising a receiver configured to receive said plurality of views from a camera array, the number of cameras of the camera array corresponding to the number of views.

5. The device according to one of claims 1 to 4, wherein operations e) and f) are reiterated until said depth map comprises a percentage of second elements having a sharpness value less than or equal to said determined level greater than or equal to a determined percentage.

6. The device according to one of claims 1 to 5, wherein the operation of associating a depth information with said each second element is performed only for second elements having an associated second sharpness value less than or equal to said determined level.

7. A method of obtaining a depth map associated with a scene, said scene being represented in a plurality of views, a different point of view being associated with each view of said plurality of views, the method comprising at least one processor configured to perform following operations:

   a) obtaining a focal stack from said plurality of views, said focal stack comprising a plurality of slices each representative of the scene at a different depth value, each slice of said plurality of slices corresponding to a matrix of first elements;
   b) for each first element of a set of first elements in each slice of said plurality of slices, determining a first sharpness value from pixels of said views used to obtain said each first element;
   c) for each second element of a set of second elements comprised in said depth map, associating a second sharpness value corresponding to the minimal first sharpness value among the plurality of first sharpness values associated with the first elements having same row and column indices as said each second element;

d) for each second element of at least a part of said set of second elements, associating a depth information with said each second element, the associated depth information corresponding to the depth value of the slice of the focal stack comprising the first element having the minimal sharpness value;

e) updating said plurality of views by removing pixels of said plurality of views used to obtain the first elements corresponding to second elements having an associated second sharpness value less than or equal to a determined level;

f) reiterating operations a) to d) based on the updated plurality of views.

8. The method according to claim 7, wherein said first sharpness value corresponds to:

- a result of a cost function measuring a similarity between pixels of said plurality of views used to obtain said each first element; or
- a result of a clustering of said pixels of said plurality of views used to obtain said each first element.

9. The method according to claim 7 or 8, wherein said first element and said second element correspond to one pixel or to a group of at least two pixels.

10. The method according to one of claims 7 to 9, further comprising receiving said plurality of views from a camera array, the number of cameras of the camera array corresponding to the number of views.

11. The method according to one of claims 7 to 10, wherein operations e) and f) are reiterated until said depth map comprises a percentage of second elements having a sharpness value less than or equal to said determined level greater than or equal to a determined percentage.

12. The method according to one of claims 7 to 11, wherein said associating of a depth information with said each second element is performed only for second elements having an associated second sharpness value less than or equal to said determined level.

13. A multimedia terminal comprising the device according to one of the claims 1 to 6.

14. A computer program product comprising instructions of program code for executing the method according to any one of claims 7 to 12, when said program is executed on a computer.

15. A processor readable medium having stored therein instructions for causing a processor to perform the operations of the method according to any one of claims 7 to 12.

**Fig 1**

**Fig 3**

**Fig 2A**

**Fig 2B**

4

| 400 | 401 | 402 | 403 |

| 410 | 411 | 412 | 413 |

| 420 | 421 | 422 | 423 |

| 430 | 431 | 432 | 433 |

**Fig 4**

5

50n

502

501

$Z_1$

$Z_2$

$Z_n$

z

**Fig 5**

**Fig 6**

**Fig 7**

86

Obtaining a matrix of views — 81

Updating the views

Obtaining a focal stack — 82

Obtaining information representative of sharpness — 83

Associating depth value(s) — 84

85

Depth map — 87

**Fig 8**

9

92

91

**CPU**

**ROM**

Prog

97

lightfield
camera

94

96

**RX**

95

93

**TX**

**RAM**

Prog

98

I/F appli

**Fig 9**

Europäisches
Patentamt

European
Patent Office

Office européen
des brevets

# EUROPEAN SEARCH REPORT

Application Number

EP 16 30 5091

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | VAIBHAV VAISH ET AL.: "Reconstructuring Occluded Surfaces using Synthetic Apertures: Stereo, Focus and Robust Measures", COMPUTER VISION AND PATTERN MEASURES, vol. 2, 2006, pages 2331-2338, XP002759211, IEEE Computer Science Conference DOI: 10.1109/CVPR.2006.244 * page 2331, paragraph 4 * * page 2332, paragraph 5 * * page 2333, paragraph 1 * ----- | 1-15 | INV. G06T7/00 |
| Y | US 2015/193937 A1 (GEORGIEV TODOR [US] ET AL) 9 July 2015 (2015-07-09) * paragraphs [0007], [0021], [0032], [0035] * ----- | 1-15 | |
| A | EP 1 355 274 A2 (ST MICROELECTRONICS INC [US]) 22 October 2003 (2003-10-22) * the whole document * ----- | 1-15 | |
| A | US 2013/222555 A1 (NAGASAKA TOMOAKI [JP] ET AL) 29 August 2013 (2013-08-29) * the whole document * ----- | 1-15 | TECHNICAL FIELDS SEARCHED (IPC) G06T H04N |
| A | US 8 619 082 B1 (CIUREA FLORIAN [US] ET AL) 31 December 2013 (2013-12-31) * the whole document * ----- | 1-15 | |

The present search report has been drawn up for all claims

| Place of search | Date of completion of the search | Examiner |
|---|---|---|
| Munich | 1 July 2016 | Nicolau, Stephane |

EPO FORM 1503 03.82 (P04C01)

## ANNEX TO THE EUROPEAN SEARCH REPORT
## ON EUROPEAN PATENT APPLICATION NO.

EP 16 30 5091

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2016

| Patent document cited in search report | | | Publication date | Patent family member(s) | | | Publication date |
|---|---|---|---|---|---|---|---|
| US 2015193937 | A1 | | 09-07-2015 | NONE | | | |
| EP 1355274 | A2 | | 22-10-2003 | EP | 1355274 | A2 | 22-10-2003 |
| | | | | JP | 2004005596 | A | 08-01-2004 |
| | | | | US | 2003198377 | A1 | 23-10-2003 |
| US 2013222555 | A1 | | 29-08-2013 | CN | 103297677 | A | 11-09-2013 |
| | | | | US | 2013222555 | A1 | 29-08-2013 |
| US 8619082 | B1 | | 31-12-2013 | AU | 2013305770 | A1 | 26-02-2015 |
| | | | | CA | 2881131 | A1 | 27-02-2014 |
| | | | | CN | 104662589 | A | 27-05-2015 |
| | | | | EP | 2888720 | A1 | 01-07-2015 |
| | | | | KR | 20150046113 | A | 29-04-2015 |
| | | | | SG | 11201500910R | A | 30-03-2015 |
| | | | | US | 8619082 | B1 | 31-12-2013 |
| | | | | US | 8780113 | B1 | 15-07-2014 |
| | | | | US | 2014321712 | A1 | 30-10-2014 |
| | | | | US | 2015042766 | A1 | 12-02-2015 |
| | | | | US | 2015042767 | A1 | 12-02-2015 |
| | | | | US | 2015049915 | A1 | 19-02-2015 |
| | | | | US | 2015049916 | A1 | 19-02-2015 |
| | | | | US | 2015049917 | A1 | 19-02-2015 |
| | | | | WO | 2014031795 | A1 | 27-02-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013105151 A

**Non-patent literature cited in the description**

- Reconstructing Occluded Surfaces using Synthetic Apertures: Stereo, Focus and Robust Measures. **VAIBHAV VAISH et al.** Computer Vision and Pattern Recognition. IEEE Computer Society Conference, 2006, vol. 2

- **HAE-GON JEON JAESIK PARK GYEONGMIN CHOE JINSUN PARK ; YUNSU BOK YU-WING TAI IN SO KWEON.** *Accurate Depth Map Estimation from a Lenslet Light Field Camera*
- **LI, GUNTURK ; ZHANG.** Image demosaicing: a systematic survey. *Proc. SPIE,* 2008, vol. 6822, 68221J